# EUROPEAN PATENT APPLICATION

(11) **EP 2 538 212 A1**
(43) Date of publication of application: **26.12.2012**
(21) Application number: 12169531.6
(22) Date of filing: 14.08.2007
(51) Int. Cl.: G01N 30/60, G01N 30/88, G01N 30/52

(54) **Chromatography column**

(30) Priority: 14.08.2006 JP 2006220908
(62) Divisional of application: 07792504.8
(71) Applicant: Tokyo Electron Limited, Tokyo 107-6325 (JP); Octec Inc., Shinjuku-ku, Tokyo 1600011 (JP)
(72) Inventor: Kiyomoto, Tomofumi, Minato-ku, Tokyo 107-6325 (JP); Harada, Muneo, Oshu-shi, Iwate 023-1101 (JP); Moriyama, Hiroyuki, Yamaguchi 744-0023 (JP); Okumura, Katsuya, Tokyo 160-0011 (JP)
(74) Representative: Manitz, Finsterwald & Partner GbR

(57) **Abstract**

A high separation efficiency column (10) for chromatography is provided. The column for chromatography includes a first substrate (11) made of silicon and having a plurality of pillars (22) formed on one surface thereof; and a second substrate (12) bonded to the one surface of the first substrate (11) and constituting a flow path (13) together with the plurality of pillars (22) formed on the first substrate (11), wherein an anodically oxidized porous silicon layer (22a) is formed on a side surface of each pillar, and an anodically oxidized porous silicon layer (21a) is formed on a lower surface of the first substrate.

## Description

### [Technical Field]

The present invention relates to a column used for chromatography.

### [Background Art]

Conventionally, liquid chromatography has been used as a means for analyzing materials contained in a sample. Liquid chromatography is in general a separation method using interaction between the sample dissolved in a solution and a functional group modified on a surface of a solid. The liquid chromatography employs a column prepared by filling a stainless steel tube (SUS tube), a glass tube, or the like having thin diameter with porous fine particles, on which the functional group is modified. The sample is introduced into the column. As the liquid serving as a carrier is introduced, the sample is eluted out of the column while interacting with a solid surface.

Further, besides the method of charging the SUS tube or the like with the fine particles, there is a method of preparing the column by forming a flow path by means of etching a substrate. For example, Patent Document 1 discloses a configuration for forming a flow path provided with baffle plates by etching. Further, also described therein is a construction for forming porous aluminum oxide by anodic oxidation after filling the flow path formed on a silicon substrate with aluminum. Further, a configuration for charging the flow path with porous silicon oxide (SiO₂) or the like is also provided.
[Patent Document 1]: Japanese Patent Laid-open Publication No. H2-310467

### [Disclosure of the Invention]

### [Problems to Be Solved by the Invention]

However, the conventional packed column is charged with particles having a certain particle diameter distribution. Inside the column, since particles having different particles shapes are present adjacent to each other, there is a variation in inter-particle distance, so that a sample solution for a separation is diluted in a nonuniform manner. Furthermore, moving rates of the sample solution in the column are also different. As a result, in the conventional technology, as the sample solution diffuses inside the column, a peak width is enlarged, resulting in deterioration of separation efficiency. Further, an attempt has been also made to form a uniform flow path by closest-packing in the column by using monodisperse particles. However, the method of forming the uniform flow path has a drawback in that closest-packing is difficult.

Moreover, the separation efficiency is improved by interaction with a separation target material. Accordingly, a carrier having a large effective surface area for the separation target material is utilized for better separation efficiency. However, in the configuration as disclosed in Patent Document 1 in which the baffle plate is formed on the flow path, a sufficient surface area capable of interacting with the separation target material is difficult to obtain.

Furthermore, with regard to the method of anodically oxidizing the aluminum, after completion of anodic oxidation it is difficult to selectively remove only the aluminum which remains on the substrate without being oxidized. Especially, in the event that the flow path is microscopic, aluminum may not be formed in the flow path successfully. As a result, there is a likelihood that a flow path without having aluminum oxide therein may be generated.

In addition, as for the method of filling the porous SiO₂, planarization etching needs to be performed on an interface of the substrate after forming the porous SiO₂. Thus, the process becomes complicated.

Therefore, there has been a demand for a column having a sufficient surface area (modified area) in a flow path while capable of suppressing a generation of a turbulent flow efficiently and, also, a demand for a simple and easy manufacturing method of forming such a column.

In view of the foregoing, the present invention provides a chromatography column having a good separation efficiency; and a manufacturing method thereof.

### [Means for Solving the Problems]

In accordance with a first aspect of the present invention, there is provided a column for chromatography, the column including: a first substrate having a plurality of pillars formed on one surface thereof; and a second substrate bonded to the one surface of the first substrate and constituting a flow path together with the plurality of pillars formed on the first substrate, wherein at least a surface of each pillar is formed in a porous shape.

The plurality of pillars may be formed in a recess provided on the first substrate, and the second substrate may be formed in a flat plate shape and bonded to the first substrate so as to cover the plurality of pillars.

The plurality of pillars may be formed in a recess provided on the first substrate, and a recess and a plurality of pillars corresponding to the recess and the plurality of pillars formed on the first substrate respectively may be formed on the second substrate.

The second substrate may be provided with a recess corresponding to the plurality of pillars.

The pillar may be formed in the porous shape from the surface to the center thereof so that the entire pillar may be formed in the porous shape.

The plurality of pillars may be spaced apart from each other in the flow path at a substantially same spacing.

Spacings of the pillars and/or diameters of the pillars may be different for each of regions inside the flow path.

The first substrate may be made up of a silicon substrate.

In accordance with a second aspect of the present invention, there is provided a manufacturing method of a column for chromatography, the method including: a mask forming process for forming a mask, which is provided with a pattern corresponding to a pillar, on one surface of a first substrate; a pillar forming process for forming the pillar by etching the first substrate through the mask; a porousifying process for forming at least a surface of the pillar in a porous shape; a mask removing process for removing the mask formed on the first substrate; and a substrate bonding process for bonding a second substrate to the first substrate.

In the porousification process, at least the surface of the pillar may be formed in the porous shape by anodic oxidation.

In the porousification process, the entire pillar may be formed in the porous shape by anodic oxidation.

In the porousification process, the pillar itself formed on the first substrate may be porousified, so that at least the surface of the pillar may be formed in the porous shape.

In the pillar forming process, the pillars may be spaced apart from each other at a substantially same spacing.

In the pillar forming process, spacings of the pillars and/or diameters of the pillars may be different for each of regions in the flow path.

The first substrate may be made up of a silicon substrate.

### [Effect of the Invention]

In accordance with the present invention, it is possible to provide a chromatography column capable of suppressing diffusion of a separation target material within a flow path by a uniform flow therein by forming pillars at an almost same spacing and having a high separation efficiency by porousifying at least the surfaces of the pillars after forming them by an etching process, and a manufacturing method thereof.

### [Brief Description of the Drawings]

Fig. 1 provides a plane view showing a configuration example of a column in accordance with an embodiment of the present invention;
Fig. 2 sets forth a cross sectional view taken along a line A-A of Fig. 1;
Figs. 3(A to C) depict cross sectional views illustrating a manufacturing method for the column in accordance with the embodiment of the present invention;
Figs. 4(D to F) present cross sectional views still illustrating the manufacturing method for the column in accordance with the embodiment of the present invention;
Fig. 5 is a cross sectional view showing a modification example of a column in accordance with the embodiment of the present invention;
Figs. 6(A and B) offer cross sectional view showing modification examples of a column in accordance with the embodiment of the present invention;
Fig. 7 depicts a plane view showing another modification example of a column in accordance with the embodiment of the present invention;
Fig. 8 is a plane view showing still another modification example of a column in accordance with the embodiment of the present invention; and
Fig. 9 presents a plane view showing still another modification example of a column in accordance with the embodiment of the present invention.

### [Explanation of Codes]

10: Column
11: First substrate
12: Second substrate
12a: Inlet opening
12b: Outlet opening
13: Flow path
21: Recess
21a, 22a: Porous layers
22: Pillars

### [Best Mode for Carrying out the Invention]

Hereinafter, a column for chromatography and a manufacturing method therefor will be described in accordance with an embodiment of the present invention.

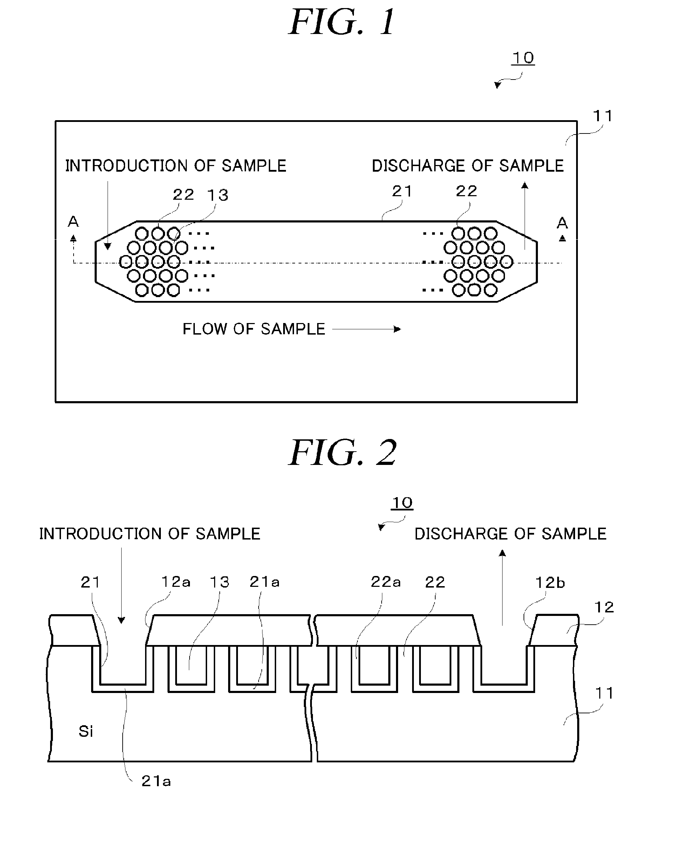

The column 10 for chromatography is illustrated in Fig. 1 and Fig. 2 which is a cross sectional view taken along a line A-A of Fig. 1. The column 10 in accordance with the present embodiment is used, for example, in liquid chromatography. In Fig. 1, illustration of a second substrate 12 is omitted for the simplicity of explanation of a recess 21 and pillars 22.

The column 10 in accordance with the present embodiment includes, as shown in Figs. 1 and 2, a first substrate 11 and the second substrate 12. The recess 21 and a plurality of pillars 22 are formed on the first substrate 11. On the second substrate 12, there are formed an inlet opening 12a for introducing a sample and an outlet opening 12b for discharging the sample, as illustrated in Fig. 2. The recess 21, the pillars 22, the inlet opening 12a and the outlet opening 12b constitute a flow path 13. Specifically, as shown in Figs. 1 and 2, the sample is introduced to the inlet opening 12a and discharged out from the outlet opening 12b after passing through the pillars 22.

The first substrate 11 is made up of, e.g., a silicon substrate. The recess 21 and the pillars 22 are formed on the top surface of the substrate 11. By anodic bonding, the second substrate 12 is air-tightly bonded to the top surface of the first substrate 11 on which the recess 21 and the pillars 22 are formed.

As illustrated in Figs. 1 and 2, the recess 21 is formed in a substantially rectangular cross sectional shape, and it has a rectangular shape whose both ends are formed in trapezoid shapes when viewed from the top thereof. The width of the recess 21 ranges from, e.g., about 50 µm to 2000 µm, desirably about 300 µm to 500 µm, and the length of the recess 21 is in the range of, e.g., about 10 mm to 1 m, desirably about 30 mm and 500 mm. The inlet opening 12a for introducing the sample and the outlet opening 12b for discharging the sample are formed on the top surface of the recess 21 at both ends thereof. Accordingly, to facilitate the smooth flow of the sample, both ends of the recess 21 are formed in the trapezoid shapes and they are enlarged toward the center of the recess 21. Further, as shown in Fig. 2, the recess 21 has, at its bottom surface, a porous layer 21a formed in a porous shape, like the surfaces of the pillars 22. Further, when viewed from the top thereof, the shape of the recess 21 is not limited to the rectangular shape but it can be formed in, e.g., a spiral shape, a zigzag shape, or the like. The shape of the recess can be appropriately selected depending on the size of the first substrate 11, the required length of the flow path 13, or the like.

Each of the plurality of pillars 22 are formed in, e.g., a columnar shape. The pillars 22 are formed by etching the first substrate 11, as will be described later. The pillars 22 are distanced apart from each other at a substantially same spacing. The respective pillars 22 are arranged with the appropriate spacing maintained therebetween such that a desired pressure is obtained. For example, the diameter of the pillar 22 is set to range from about 1 µm to 10 µm, desirably about 4 µm to 7 µm, and the height of the pillar 22 is set to be in the range of, e.g., about 10 µm to 300 µm, desirably about 40 µm to 60 µm. Further, the adjacent pillars 22 are spaced apart from each other by, e.g., about 1 µm to 10 µm, desirably about 1.5 µm to 3 µm. As described above, by maintaining the substantially uniform spacing between the pillars 22 appropriately, the flow of the sample is facilitated, so that generation of a turbulent flow in the flow path 13 can be suppressed successfully. Further, in comparison with the aforementioned conventional column obtained by filling the stainless steel tube or the like with the fine particles, a pressure can be reduced when introducing the sample. Moreover, a porous layer 22a having a porous shape is formed on the surface of the pillar 22 by anodic oxidization, as will be described later. In addition, though the porous layer 21a formed on the bottom surface and the lateral surface of the recess 21 and the porous layer 22a of the pillar 22 are formed as one body in a single process to be described later, they are assigned different reference numerals for the convenience of explanation.

Further, a functional group may be introduced into the porous layer 21a of the recess 21 and the porous layer 22a of the pillar 22. The introduced functional group can be appropriately selected depending on a sample to be analyzed. The selected functional group may be, for example, an ion-exchange group, a hydrophobic group, a hydrophilic group, an affinitive group or the like and is used as a filler for the liquid chromatography. The ion functional group may include an anion-exchange group represented by an amino group, a mono-substituted amino group, a disubstituted amino group, a tri-substituted amino group, or a cation-exchange group represented by a carboxyl group, a sulfonic acid group. Further, the hydrophobic group may be an aliphatic chain compound represented by a butyl group, an octyl group, an octadecyl group, or the like, or an aromatic compound represented by a phenyl group, a naphthyl group or the like. Further, the hydrophilic group may be polyhydric alcohols such as (poly)ethylene glycol or glycerin, saccharide such as glucose or the like. Furthermore, the affinitive group may be such a compound having affinity to a certain material, such as protein A having affinity to an antibody, heparin having affinity to a blood clotting factor, or the like. As stated above, by introducing the functional group on the surface of the pillars 22, the separation target materials can be easily separated.

For example, in a flow path provided with porous pillars each having a pore diameter smaller than the molecule size of a separation target material A in the sample flowing in the column 10 but larger than the molecule size of a separation target material B therein, the material A flows through the flow path faster than the other materials without entering the holes of the pillars 22 and is discharged out from the discharge opening. Meanwhile, since the material B flows through the flow path while entering the holes of the pillars repetitively, it is discharged out over a longer period of time in comparison with the material A having the larger particle diameter. As stated above, since the time taken for the materials to pass through the flow path differs depending on the particle diameters, the materials contained in the sample can be successfully separated from each other.

The second substrate 12 is made of, e.g., a glass substrate, and it has the inlet opening 12a and the outlet opening 12b at its positions corresponding to both ends of the flow path 13 (i.e., both ends of the recess 21), respectively. The second substrate 12 is air-tightly bonded to the first substrate 11 by the anodic bonding, whereby the flow path 13 is formed.

In case that the aforementioned functional group introduced on the surface of the pillars is, e.g., an ion-exchange group, a separation target material having counter ions with respect to the introduced ions moves through the flow path while having an ionic interaction with the introduced ions when the sample is introduced into the column 10 from the inlet opening 12a at a certain pressure. At this time, if ionic interaction is different depending on the properties and states of the separation target materials, their moving rates in the flow path are different as well. Accordingly, the respective separation target materials having different properties and states pass through the flow path 13 at different times and are discharged out from the outlet opening 12b. The materials having passed through the flow path 13 are electrically or optically detected by a detector.

As described above, as for the column 10 in accordance with the present embodiment, the pillars 22 are regularly arranged. Accordingly, unlike the conventional configuration of filling the stainless steel tube or the like with fine particles, the sample can be introduced at a low pressure. Furthermore, as will be described later, the recess 21 and the pillars 22 of the column 10 are formed by way of etching the silicon substrate. Accordingly, the pillars 22 can be densely arranged, and densification of the scale of the column 10 can be easily achieved. As stated, since the pillars 22 can be easily and densely arranged while the control of spacings between the pillars 22 is easy as well, generation of a turbulent flow in the column 10 can be prevented. Furthermore, since not only the plurality of pillars 22 are formed in the flow path 13 but also the lateral and bottom surfaces of the recess 21 and the surfaces of the pillars 22 are formed in the porous shapes, a sufficient surface area can be obtained. Therefore, the column 10 is allowed to have sufficiently high separation efficiency. As described above, the column 10 in accordance with the present embodiment can successfully suppress the generation of the turbulent flow, and it features high separation efficiency because it has the sufficient surface area (modified area).

Now, a manufacturing method for the column 10 in accordance with the present embodiment will be described with reference to the accompanying drawings.

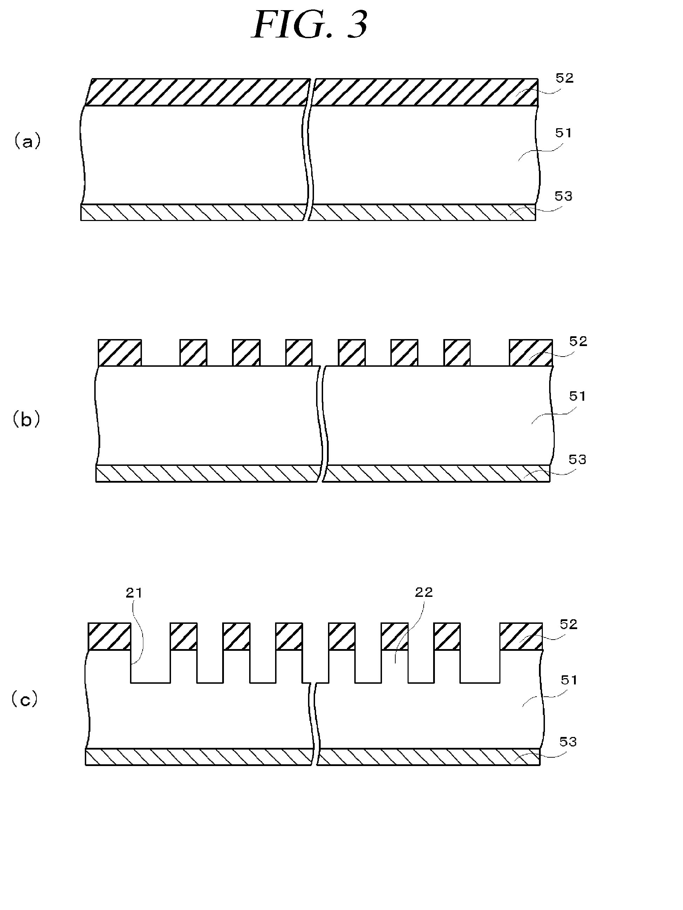

First, as shown in Fig. 3(A), for example, a substrate 51 made of silicon is prepared.
Then, a mask 52 made of, e.g., SiO₂is formed on the substrate 51 in a thickness sufficiently exceeding an etching amount by HF in an anodic oxidation process to be described later.

Subsequently, as illustrated in Fig. 3(B), patterning is performed by photolithography or the like such that the mask 52 remains only at regions where the pillars 22 are to be formed and also at regions except where the grove 21 is to be formed.

Further, as shown in Fig. 3(A), a conductor film, e.g., an Al film 53 is formed on the bottom surface (the surface opposite to the surface where the pillars 22 are formed) of the substrate 51 by sputtering or the like so as to be used as an electrode during the anodic oxidation of the pillars 22.

Thereafter, as illustrated in Fig. 3(C), the substrate 51 is etched in a preset depth by reactive ion etching (RIE) while using the mask 52 as a mask. As a result, the recess 21 and the pillars 22 are formed.

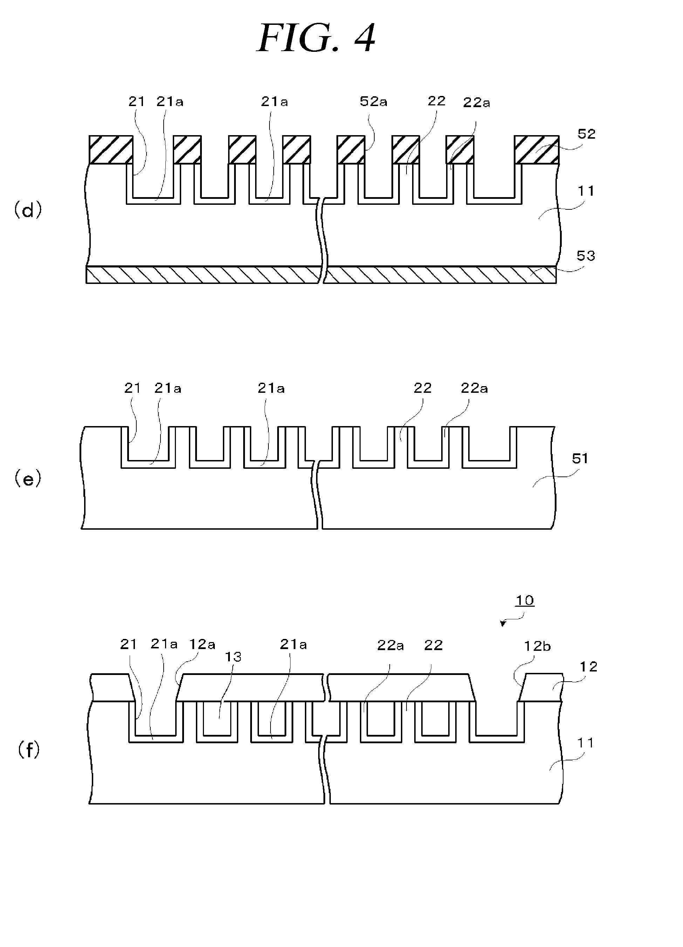

Then, as shown in Fig. 4(D), while using the mask 52 as a mask, an electric field is applied to the substrate 11 in a mixed solution of HF and ethanol to thereby anodically oxidize the substrate 11 on which the pillars 22 are formed. At this time, only the surfaces of the pillars 22 and the lower surface of the substrate 11, i.e., the region which is not covered with the mask 52 are anodically oxidized selectively, whereby the surfaces of these regions become porous (i.e., porousified). As a result, porous layers 21a and 22a are formed.

Thereafter, the mask 52 and the Al film 53 are removed, as shown in Fig. 4(E).

Then, as illustrated in Fig. 4(F), the second substrate 12 previously provided with the inlet and outlet openings 12a and 12b is bonded to the top surface of the first substrate 11 by anodic bonding. As a result, the flow path 13 is formed by the recess 21 and the pillars 22 which are formed in the first substrate 11 and the second substrate 12.
Through the above-described process, the column 10 is formed as illustrated in Fig. 4(F).

In the manufacturing method for the chromatography column in accordance with the present embodiment, the recess and the pillars 21 and 22 are formed by the etching. Accordingly, the diameter and arrangement of the pillars 22 and the spacing between them can be easily controlled, and the pillars 22 can be formed densely. Thus, in accordance with the present embodiment, the densification of the scale of the column 10 can be readily achieved. Furthermore, since the spacing between the adjacent pillars 22 can be easily altered, the pressure when introducing the sample into the flow path can be reduced in comparison with the conventional configuration of charging a tube with fine particles, and the generation of turbulent flow in the column 10 can be further suppressed.

Further, the porous layers 21a and 22a are formed by the anodic oxidation of the substrate 11 itself on which the recess 21 and the pillars 22 are formed. Accordingly, unlike in the prior art in which an aluminum film is formed in the flow path and then is anodized and porousified, the porous layers 21a and 22a can be easily formed even in case the recess 21 and the pillars 22 are miniaturized. Moreover, since the film forming process for the aforementioned aluminum film or the like can be omitted, the manufacturing process can be simplified, resulting in improvement of manufacturing efficiency and reduction of cost.

As stated above, the control of the diameter, the arrangement and the spacing of the pillars 22 can be readily performed, and the lower surface of the recess 21 and the surfaces of the pillars 22 can be easily porousified even in case that the diameter of the pillars 22 and the spacing between them become microscopic. Accordingly, by employing the manufacturing method in accordance with the present embodiment, the column 10 having the sufficient surface areas (modified areas) can be formed.

As stated above, by the manufacturing method in accordance with the present embodiment, the sufficient surface area can be obtained while the generation of the turbulent flow is suppressed. Therefore, it is possible to fabricate a column having good analysis efficiency.

The present invention is not limited to the above-described embodiment, and various modifications and applications are possible. For example, though the present embodiment has been described for the case where only the surface of the pillar 22 is porousified, the degree to which the pillar 22 is porousified from its surface to center can be appropriately changed depending on a performance level required for the column, the property of the sample, and so forth. In such case, the degree of porousification of the pillar can be adjusted by varying a processing time of the anodic oxidation, the kind of the used solution, and the like. For example, about 10% of the range from the surface of the pillar 22 to its center can be porousified, or about 25%, 50%, 70% can be porousified. Further, it is also possible to porousify 100% of the range from the surface of the pillar 22 to its center, i.e., to porousify the entire pillar 22. By forming the pillar 22 as described above, the porousified region and the surface area can be increased, resulting in improvement of separation efficiency.

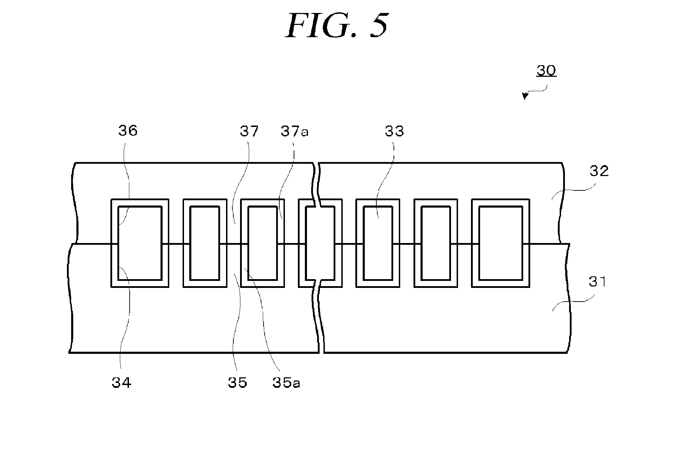

Further, the present embodiment has been described for the example of configuration in which the flat plate-shaped second substrate 12 is bonded to the first substrate 11 provided with the recess 21 and the pillars 22 so that the recess 21 may be covered. However, the present invention is not limited to this configuration. For example, as in a column 30 shown in Fig. 5, a recess 34 and pillars 35 can be formed on a first substrate 31, and a recess 36 and pillars 37 can be formed on a second substrate 32. Then, a flow path 33 can be formed by bonding the first substrate 31 and the second substrate 32 together. Further, a porous layer 35a, which is formed in a porous shape by, e.g., anodic oxidation, is formed on the surface of the pillar 35. Likewise, a porous layer 37a is formed on the surface of the pillar 37.

Further, in the embodiment shown in Fig. 5, leading ends of the pillars 35 of the first substrate 31 and leading ends of the pillars 37 of the second substrate 32 are aligned to each other. However, the present invention is not limited to such embodiment. The pillars 35 of the first substrate 31 can be positioned in spaces between the pillars 37 of the second substrate 32, while the pillars 37 of the second substrate 32 are positioned in spaces between the pillars 35 of the first substrate 31. Then, the porous layer 35a is formed on the surface of each pillar 35, while the porous layer 37a is formed on the surface of each pillar 37.

Further, it is possible to position the pillars 35 of the first substrate 31 in the spaces between the pillars 37 of the second substrate 32 and to position the pillars 37 of the second substrate 32 in the spaces between the pillars 35 of the first substrate 31. Further, a distance between the pillars 35 and a distance between the pillars 37 can be set different respectively.
Moreover, the diameters of the pillars 35 and 37 can be set different. For example, the diameter of the pillars 37 can be larger than the diameter of the pillars 35, and the diameter of the pillars 37 can be smaller than the diameter of the pillars 35.
In addition, both the distance between the pillars 35 and the diameter thereof can be set to be different from both the distance between the pillars 37 and the diameter thereof.

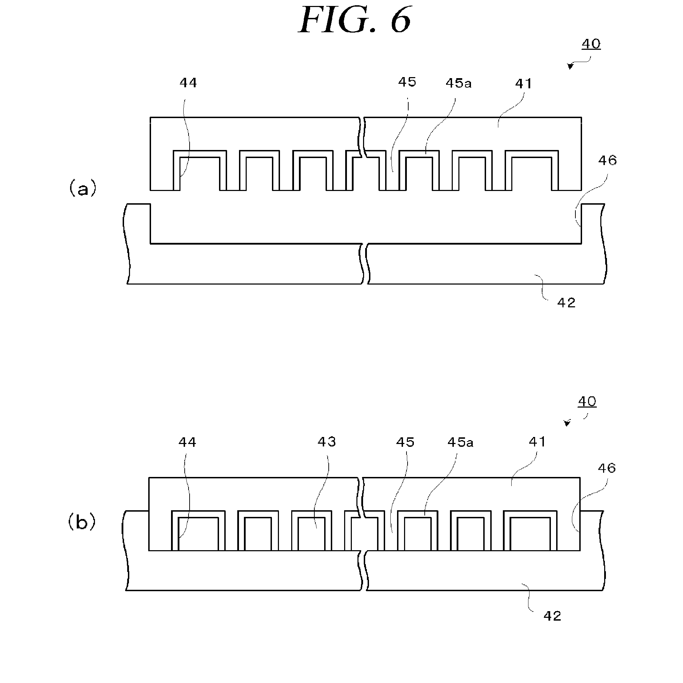

Moreover, as in a column 40 shown in Fig. 6(A), a recess 44 and pillars 45 can be formed on a first substrate 41, while a recess 46 having a depth corresponding to the height of the pillars 45 can be formed on a second substrate 42. Then, a flow path 43 can be formed by bonding the second substrate 42 to the first substrate 41, as illustrated in Fig. 6(B). Further, a porous layer 45a in a porous shape is formed on the surface of the pillar 45. In the column 40 shown in Figs. 6 (A and B), the depth of the recess 46 is the same to the height of the pillar 45, for example. However, the depth of the recess 46 can be set to be larger than or smaller than the height of the pillar 45. Further, it may be also possible to constitute the flow path by forming only the pillars on the first substrate without forming a recess while forming a recess corresponding to those pillars on the second substrate.

Moreover, in the above-described embodiment, a case that the pillars 22 have the substantially same diameters over the whole flow path and are distanced apart at the almost same spacing has been described for the example. However, the present invention is not limited thereto. For example, the arrangement density of the pillars can be varied by changing the diameters of the pillars and the spacings therebetween.

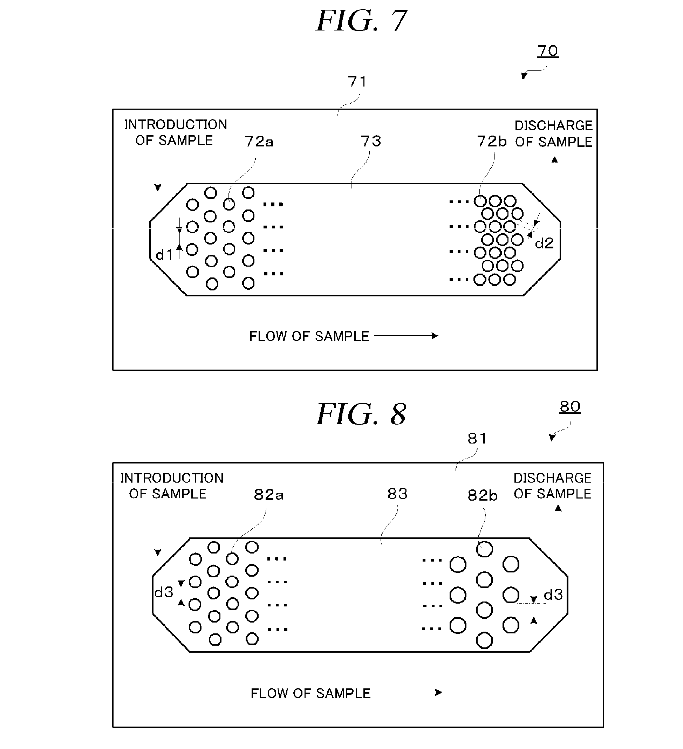

For example, as in a column 70 shown in Fig. 7, diameters of pillars 72a, 72b formed on a first substrate 71 are the same all across an entire flow path 73, whereas spacings between the pillars 72a, 72b may be set to be different. As illustrated in the figure, the adjacent pillars 72a on an inlet side of the sample are formed to be equi-spaced apart from each other at a distance d1 while the adjacent pillars 72b on an outlet side of the sample are equi-spaced apart from each other at a distance d2 (d2 < d1).

Alternatively, as in a column 80 shown in Fig. 8, it may be also possible to form pillars 82a and 82b having different diameters in a flow path 83 while setting the spacing between adjacent pillars 82a to be the same with the spacing between adjacent pillars 82b. As illustrated in the drawing, the diameter of the pillar 82a is set to be smaller than the diameter of the pillar 82b. However, the adjacent pillars 82a are equi-spaced apart from each other at a distance d3, while the adjacent pillars 82b are equi-spaced apart from each other at the same distance d3.

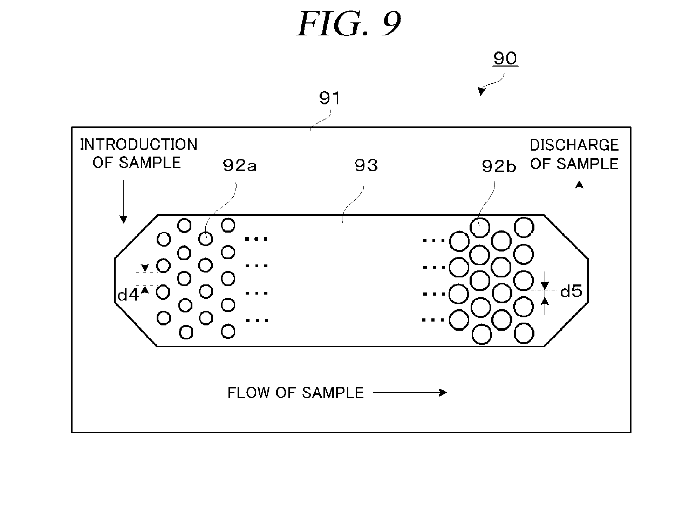

Alternatively, as in a column 90 shown in Fig. 9, it may be also possible to form pillars 92a and 92b having different diameters in a flow path 93, and a distance between adjacent pillars 92a or the distance between adjacent pillars 82b may be changed. As illustrated in the drawing, the diameter of a pillar 92a formed on an inlet side of a sample is set to be smaller than that of the pillar 92b formed on an outlet side of a sample. Further, adjacent pillars 92a or adjacent pillars 92b are equi-spaced apart from each other. The distance d4 between the adjacent pillars 92a is formed larger than the distance d5 between the adjacent pillars 92b (d5 < d4).

Further, in all of Figs. 7 to 9, the present embodiment has been described for the configuration in which the pillars are more densely arranged on the outlet side of sample than on the inlet side of the sample. However, it may be also possible to adopt a configuration in which the pillars are densely arranged in the vicinity of the inlet opening while they are gradually dispersed toward the outlet opening to be loosely arranged therearound. Furthermore, it may be also possible to employ a configuration of providing a high-density region and a low-density region alternately, a configuration of varying the arrangement density in multiple stages, and the like and to combine those configurations in various ways.

As described so far, by varying the spacing between the pillars, the diameter of each pillar or the like, it is possible to manufacture the column having the desired level of separation efficiency depending on the property of the sample, the required level of analysis accuracy, and the like. Further, by varying the diameter of the pillars and the spacing between the pillars, the arrangement density of the pillars can be altered in multiple stages. They can be altered periodically or combined arbitrarily.

Further, the above-described embodiments have been described for the example case that the shape of the pillar has a circular shape when viewed from the top thereof. However, when viewed from the top thereof, the shape of the pillar is not limited to the circular shape but it can have a semicircular shape, a rectangular shape, a polygonal shape, or the like.

This document is based on Japanese Patent Application No. 2006-220908, filed August 14, 2006, the entire content of which are hereby incorporated by reference.

### [Industrial Applicability]

The present invention has many advantages when it is used in an apparatus for analyzing materials contained in a sample. Further, the present invention can also be employed in a manufacturing method for such apparatus.

## Claims

1. A column (10) for chromatography, the column comprising:
a first substrate (11) having a plurality of pillars (22) formed on one surface thereof; and
a second substrate (12) bonded to the one surface of the first substrate (11) and constituting a flow path (13) together with the plurality of pillars (22) formed on the first substrate (11),
wherein at least a surface of each pillar is formed in a porous shape.

2. The column (10) of claim 1, wherein
the first substrate (11) is made of silicon,
an anodically oxidized porous silicon layer (22a) is formed on a side surface of each pillar (22), and
an anodically oxidized porous silicon layer (21 a) is formed on a lower surface of the first substrate (11).

3. The column (10) of claim 1, wherein the pillar (22) is formed in the porous shape from the surface to the center thereof so that the entire pillar 22 is formed in the porous shape.

4. The column (10) of claim 1, wherein the plurality of pillars (22) are spaced apart from each other in the flow path at a substantially same spacing.

5. The column (70, 80, 90) of claim 1, wherein spacings of the pillars (72, 82, 92) and/or diameters of the pillars (72, 82, 92) are different from each other.

6. The column (10) of claim 1, wherein the plurality of pillars (35) is formed in a recess (34) provided on the first substrate (31), and a plurality of pillars (37) is formed in a recess (36) provided on the second substrate (32), and leading ends of the plurality of pillars (35) of the first substrate (31) and leading ends of the plurality of pillars (37) of the second substrate (32) are aligned to each other.
